# EUROPEAN PATENT APPLICATION

(11) **EP 4 850 977 A1**
(43) Date of publication of application: **09.12.2026**
(21) Application number: 25181511.4
(22) Date of filing: 06.06.2025
(51) Int. Cl.: B60N 2/015, B60N 2/36, B62D 25/20, B62D 65/02

(54) **BRACKET FOR ONE OR MORE FOLDABLE REAR SEATS OF A VEHICLE**

(71) Applicant: Volvo Car Corporation, 405 31 Göteborg (SE)
(72) Inventor: CHENG, Kim, 40531 Göteborg (SE); WESLEY, Kevin, 40531 Göteborg (SE); HANSEN, Josefin, 40531 Göteborg (DE); ERIKSSON, Carin, 40531 Göteborg (SE)
(74) Representative: Kransell & Wennborg KB

(57) **Abstract**

Bracket (10) for one or more foldable rear seats (20) of a vehicle (100), wherein the bracket (10) comprises:
a first opening (11) for attachment to at least one pivot element (21), the first opening (11) comprising a first axis (12) extending through a center of the first opening (11), the first axis (12) substantially coinciding with a pivot axis (A) of the at least one pivot element (21) for folding the one or more foldable rear seats (20) around the pivot axis (A); and
at least two second openings (13) for attachment to a rear part structure (30) of the vehicle (100), wherein each one of the at least two second openings (13) comprises a second axis (14) extending through each center of each one of the at least two second openings (13), and wherein each second axis (14) is oriented at an angle (α) in the range of 0° to 45° to the first axis (12).

## Description

### TECHNICAL FIELD

The present disclosure relates to a bracket for one or more foldable rear seats of a vehicle, the use of such bracket in a vehicle, and a vehicle comprising one or more foldable rear seats and such bracket.

### BACKGROUND ART

The rear seat row in a passenger car is normally divided into three passenger seats, which can often be folded down to create more space for storage. The rear seats can be folded either individually (also known as a so-called 40/20/40 split) to allow for a more customizable storage space, or in sections (also known as a so-called 60/40 split), where two seats fold separately from the third seat.

Normally, the rear seats fold around a shared pivot axis. Along the pivot axis are multiple pivot points, which hold the axis and aid in providing rigidity. The pivot points may be provided by pivot elements such as pivot pins inserted into respective brackets mounted on the vehicle body. These pivot elements are normally connected to the frame of the rear seats. The pivot points are normally located on each end of the axis, and in between the folding seats or sections.

Typically, a 40/20/40 seat split will therefore have one more pivot point compared to a 60/40 seat split. The pivot axis is typically located near the lower back support of the rear seats, which results in a long lever when measuring from the pivot axis to the top of the back rest of the rear seats. The long lever puts a particularly high demand on position tolerance of the pivot points in X and Z direction or, in other words, in height and depth direction of the rear seats, since a small misalignment of the pivot points in relation to the pivot axis could result in the individual seats clashing with each other when folding the seats.

Therefore, it is desirable that the seat pivot points are positioned with a high accuracy, thereby enabling a clash free seat folding movement. Furthermore, a lower tolerance also allows the rear seats to fit tighter together in the unfolded or upright position, which increases the perceived quality of the rear seats.

### SUMMARY

The problem is at least partially solved or alleviated by the subject matter of the independent claims of the present disclosure, wherein further examples are incorporated in the dependent claims.

According to a first aspect of this disclosure, there is provided a bracket for one or more foldable rear seats of a vehicle. The bracket comprises a first opening for attachment to at least one pivot element. The first opening comprises a first axis extending through a center of the first opening. The first axis substantially coincides with a pivot axis of the at least one pivot element for folding the one or more foldable rear seats around the pivot axis. The bracket further comprises at least two second openings for attachment to a rear part structure of the vehicle. Each one of the at least two second openings comprises a second axis extending through each center of each one of the at least two second openings. Each second axis is oriented at an angle in the range of 0° to 45° to the first axis.

Advantageously, the proposed bracket enables adjustability of its mounting on the rear part structure and thereby at the rear seats with respect to its Z position or direction, which corresponds to the height position or direction of height extensions in terms of the rear seats, by adjusting the position of one or more of the at least two second openings on the bracket, specifically the drilling, machining or punching position as examples of possibilities to provide the second openings in the bracket. Additionally, the adjustment may also be provided with respect to the X position or direction, which corresponds to the depth or thickness position or direction of depth or thickness extension in terms of the rear seats.

Specifically, it has been found that the X and Z position of the pivot axis or of the pivot point(s) are particularly important for the rear seat folding. Being able to adjust the pivot point in these two directions to compensate for any tolerance deviations in the bracket or the rear part structure is very advantageous, specifically but not only when using a casted rear part structure, as further described herein. With the proposed bracket, the mating surface between the bracket and the rear part structure is substantially in Y direction, which corresponds to the width position or direction of width extension in terms of the rear seats. The Y direction sets the Y position of the pivot point. The X and Z position can be adjusted by changing the position of any one or more of the at least two second openings on the bracket when for example machining these into the bracket. For example, any one or all of the first and second openings on the bracket may be machined, drilled, punched or otherwise provided in the bracket. Accordingly, the machined position of one or more of the second openings can be adjusted can be adjusted, for example in a machining cell with the bracket provided therein, to provide one or more of the drilled second openings at another position to compensate for tolerances in the manufacturing of the rear part structure.

The above is not possible with conventional brackets, which are typically fixed in the Z direction to the rear part structure. Specifically, such conventional brackets normally have the central axis of one or more second openings oriented at an orthogonal angle of 90° to the central axis of the first opening coinciding with the pivot axis. Correspondingly, an adjustment of the position of the second openings on the bracket is only possible in the X and Y direction orthogonal to the Z direction, but not in the Z direction. Therefore, in the Z direction, there is no possibility for adjustment if, for example, the rear part structure is manufactured which changed dimensions requiring adjustment of the bracket after its original design. In this case, a completely new designed or dimensioned bracket might be necessary, which for example has a different length or height in the Z direction to compensate for the new tolerances. However, such redesign of a bracket is very time intensive, e.g. because the punched geometries from a sheet metal for the bracket need to be changed, which cannot easily be done during the vehicle assembly. Accordingly, it is not possible to quickly react to tolerance demands as opposed to the herein proposed bracket, enabling a quick reaction by adapting the machining position of one or more of the second openings on the bracket to adapt the position of the first opening in the Z direction and/or in the X direction. Compared to a redesign of the dimensions of a conventional bracket, one or more of the second openings of the bracket can be easily and precisely machined during vehicle assembly, e.g. in a machining cell.

Therefore, the proposed bracket allows the one or more seat pivot points of the pivot axis at the one or more rear seats to be positioned with a high accuracy in the X and Z directions as defined herein, without the need for any additional process steps, and even when making use of a casted rear part structure, as further described herein.

As referred to herein, the X, Y and Z position, direction or axis generally define different orientations with respect to the one or more foldable rear seats, each one of the X, Y and Z orientation being orthogonal to the respective other two orientations, thereby defining a coordinate system on the one or more foldable rear seats. Generally, the Z orientation is one along which the one or more rear seats extend with their height from bottom to top of the vehicle, the X orientation is one along which the one or more rear seats extend in depth or thickness from front to rear of the vehicle, and the Y orientation is one along which the one or more rear seats extend in width from side to side of the vehicle, specifically from one passenger door to the other passenger door.

The bracket is designed with openings and comprises at least three openings. The openings are referred to herein as a first opening and at least two second openings for the purpose to distinguish between these in terms of their function, namely attachment to the at least one pivot element or to the rear part structure. At least one, multiple or all openings may be provided inside the bracket by drilling or any other method such as but not limited to punching. The openings may also be referred to herein as apertures, holes or bores. The openings have a longitudinal extension through the bracket corresponding to the width or strength of the bracket at their position on the bracket. Their longitudinal extension is defined along an axis, herein respectively referred to as a first axis and second axes for each one of the first and second openings. Typically, when drilling or machining the openings, their axis is defined by the orientation of the driller with respect to the bracket. Each one of these axes extends centrally inside the openings or, in other words, through a center of the openings. The axes may also be referred to as coaxial, common and/or center axes of their respective openings. As such, the orientations of the axes define their attachment orientation in the X, Y and Z coordinate system. Specifically, the pivot element and/or the pivot axis may at least partially extend or be at least partially located within the first opening. Thereby, the first axis will substantially coincide with the pivot axis. Substantially herein means that marginal deviations due to tolerances may be possible. On the other hand, the at least two second openings may serve to have these attached to the rear part structure through fastening elements like screws or bolts, for example. Accordingly, the second axes define their attachment orientation in the X, Y and Z coordinate system through the insertion or alignment of the fastening elements within the second openings and along the second axes.

Each second axis of each second opening is oriented at an angle in the range of 0° to 45° to the first axis. Each second axis may be oriented at the substantially same or a different angle in the range of 0° to 45° to the first axis. The angle may be closer to 0° than to 45° such that a substantially, or more or less parallel arrangement between each second axis and the first axis and thereby the pivot axis is provided. An exactly parallel arrangement can be provided at an angle of 0°. Thereby, the bracket can allow the one or more seat pivot points of the pivot axis at the one or more rear seats to be positioned with a particularly high accuracy in the X and Z directions through adjusting the positions of one or more of the at least two second openings thereon.

In an example, each second axis may be oriented at an angle in the range of 3° to 30° to the first axis. For example, the angle may be in the range of 5° to 20°, more specifically in the range of 10° to 15°. Specifically, it has been found advantageous to provide an angle that provides a near or almost parallel arrangement of each second axis with the first axis and thus the pivot axis for the adjustability of the bracket as described herein. However, for manufacturing purposes, it has been found that a slight deviation from an exact parallel arrangement may still be desired. For example, when casting the rear part structure, the connection structures of the rear part structure to the bracket, such as bosses, may require or benefit from a draft angle of e.g. about 3° to ease casting of the rear part structure. Also, providing corresponding connection elements like openings or bores inside the connection structures, e.g. by drilling these into the bosses, may be eased with an angle above 0° between each second axis and the first axis. Of course, the range of e.g. 0° to 45° or 3° to 30° also means a range of 0° to - 45° or -3° to -30° depending on the perspective when measuring the angle.

In an example, the at least two second openings may be the only openings for attachment to the rear part structure. In other words, the bracket may not comprise any further structures or elements for its attachment to the rear part structure. Accordingly, the bracket may be secured only by means of the at least two second openings and e.g. bolts or screws extending therethrough and into the rear part structure. Thereby, the adjustability of the bracket in the Y and Z direction is provided exclusively through the position of the at least two second openings on the bracket, allowing easy adjustment due tolerances of the rear part structure as described herein.

In an example, the bracket may comprise a substantially triangular shape. The first opening may be arranged at a tip of the triangular shape. The at least two second openings may be arranged at a side of the bracket opposite the tip. Thereby, the pivot axis may be located at a distance in the Z direction from the at least two second openings, which can advantageously be adjusted in their Z and X position at the side opposite of the tip of the triangle.

In an example, the bracket may be made from a sheet material. For example, the sheet material may be a sheet metal. For example, the bracket may be a punched sheet metal part. Specifically, the sheet material of the bracket may be punched with a die from a larger sheet matching the triangular shape in the plane of the sheet material. Thereby, the bracket may be manufactured particularly cost-effective. Still, additional steps in the manufacturing of the bracket may be used to increase the stiffness of the bracket and thereby the link between the one or more foldable rear seats and the pivot axis. For example, the sheet metal may be bent, specifically at one or more edges thereof, to provide an increased stiffness. Also, or alternatively, indentations may be provided in the sheet metal to increase its stiffness.

According to a second aspect of this disclosure, there is provided a use of the bracket of the first aspect of this disclosure in a vehicle.

The use or, in other words, method of using a bracket in a vehicle may also include using two or more brackets in the vehicle, which may depend on the number of desired pivot points of the rear seats.

Specifically, the use includes the usage of the bracket for linking the one or more foldable rear seats in the vehicle to the one or more pivot elements of the rear seats and to the rear part structure, utilizing the first opening and the at least two second openings of the bracket. The first opening is used to attach the pivot element thereat, e.g. arrange the pivot element within the first opening. The second openings may be used with appropriate connection means, such as bolts or screws, to fasten the bracket to the rear part structure.

According to a third aspect of this disclosure, there is provided a vehicle comprising one or more foldable rear seats and a rear part structure. A bracket of the first aspect of this disclosure is attached through the second openings to the rear part structure. The bracket is attached to the at least one pivot element through the first opening.

Accordingly, the bracket comprises the first axis, which may also be referred to herein as a first attachment axis. The first attachment axis may coincide with the pivot axis and the at least one pivot element may be extending along the first attachment axis and/or through the first opening. For example, the pivot element may be a pin or rod. Multiple such pivot elements may be provided on the same or different rear seats, which may all align or coincide with the pivot axis, about which the rear seats may be collectively or individually pivoted. Further, the bracket comprises the at least two second axes, which may be referred to herein as second attachment axes. Each one of the second attachment axis may generally be defined by the attachment element or their extension, e.g. such as bolts, screws, or similar. Specifically, the respective axes may be longitudinal, coaxial or central axes of the respective attachment elements.

In the vehicle of the third aspect of this disclosure, the first opening and the at least two second openings are only examples of respective attachment means or elements on the bracket, which could also be replaced by other attachment means or elements. For example, such attachment elements could be integrated with the bracket rather than being assembled with these by insertion of the respective attachment elements through the respective openings.

Specifically, the vehicle according to the third aspect of this disclosure or according to a further aspect of this disclosure may generally be configured as follows: A vehicle comprising one or more foldable rear seats and a rear part structure, wherein the one or more foldable rear seats and the rear part structure are coupled or connected to one another by one or more brackets. Each one of the one or more brackets may be attached to one or more of the one or more foldable rear seats by one or more first attachment elements. The one or more first attachment elements, e.g. one or more pivot elements, may be extending along a first axis substantially coinciding with or being a pivot axis for folding the one or more foldable rear seats around the pivot axis. Further, each one of the one or more brackets may be attached to the rear part structure by at least two second attachment elements. The second attachment elements, e.g. bolts or screws, may have a longitudinal extension along a second axis. Each second axis is oriented at an angle in the range of 0° to 45°, in particular in the range of 3° to 30°, to the first axis or pivot axis. Optionally, in such design of a vehicle, the bracket may be comprising the first opening and second openings as described herein. The first opening and the second openings may be comprising the first axis and the second axes as described herein. The first attachment element, e.g. the pivot element, may be extending through the first opening or be coupled thereto. Also, the second attachment elements may be extending through the at least two second openings or be coupled thereto.

Generally, the vehicle may be a car or automobile. Specifically, the vehicle may be a passenger car. The passenger car may be comprising one or more rear rows of foldable rear seats but at least comprise one such row of foldable rear seat. The rear seats in the row may be two, three or more. Different dimensions of the rear seats in terms of their width are possible, such as but not limited to a 60/40 or 50/50 split for two rear seats, or a 40/20/40 split or any other split for three rear seats.

In an example, the second openings may be the only openings of the bracket through which the second openings are attached to the rear part structure. More specifically, the second openings may be the only attachment points or means of the bracket to the rear part structure. The first opening may thereby be advantageously adjusted in its Z and X position through the positioning of the second openings on the bracket only.

In an example, the vehicle may comprise two brackets attached through their second openings to the rear part structure and attached to the at least one pivot element of two or more foldable rear seats through their first openings. In configurations with three rear seats, where each rear seat may be individually foldable, it may be advantageous to use two brackets through which the at least one or more pivot elements may be extending along their pivot axis such that the rear seats may be individually folded.

In an example, the vehicle may comprise bolts fixing the bracket through the second openings to the rear part structure. Specifically, the bolts may be screws comprising an external thread, the external thread being screwed into an internal thread of the rear part structure to arrange the bracket at the rear part structure.

In an example, the rear part structure may comprise bosses. Each one of the bosses may be comprising a third opening. Each one of the bolts may fix the bracket through the second openings and the third openings of the bosses to the rear part structure. The bosses may generally be configured as structures protruding in the Z direction from the rear part structure. The third openings may have internal threads to correspond to external threads on the bolts.

In an example, the rear part structure may comprise guiding ribs adjacent to the bosses. The bracket may be at least partially guided in between the bosses and the guiding ribs. In other words, there may be a space between each boss and each rib, guiding the assembly of the brackets since the bracket may be inserted into the space and optionally at least partially held between the boss and rib during fastening of the bracket to the rear part structure. In view of their function, the ribs are herein referred to as guiding ribs. This eases the assembly of the bracket.

In an example, the rear part structure with the bosses may be a monolithically casted structure or, in other words, casting. All portions and members of the rear part structure, including the bosses, may be integrally designed with one another, meaning that all these portions and members are part of the one-piece or monolithic structure of the rear part structure. The rear part structure may be made from one single material, specifically a metal, e.g., aluminum or an aluminum alloy. Such aluminum casting may be made entirely from aluminum or can comprise aluminum, e.g., predominantly aluminum, and other materials, specifically metals. In particular, the rear part structure may be advantageously casted from metal, specifically as a single part in the form of a mega casting. For example, for the mega casting, a High-Pressure Die Casting (HDPC) process may be used, where the molten metal, such as but not limited to aluminum, is pushed into a die or, in other words, mold. This die consists of die tools that are pressed together and sealed just before the molten metal is pushed in. After the metal is pushed in, the tools are retracted, and the die opens again, and the casted metal rear part structure can be removed from the open die.

In an example, the rear part structure may further comprise two wheelhouse portions for partially housing a wheel therein. Further, the rear part structure may comprise a base portion extending between the two wheelhouse portions. The bosses may be arranged on the base portion. All portions may be integrally or monolithically casted as part of the rear part structure. The wheelhouse portions may be located at opposite ends of the rear part structure, in particular of the base portion. The wheelhouse portions may generally comprise a convex or bulge shape, which may be extending with its convex or bulge shape towards the base portion. Also, the wheelhouse portions may generally have an at least partially round or circular circumference or perimeter. Thereby, the wheels of the vehicle can be at least partially received within a space formed by the convex or bulge shape and within the at least partially round or circular perimeter of the wheelhouse portions. Each one of the wheelhouse portions may comprise a shock absorber segment for receiving a shock absorber. A floor support structure can be supported in between the wheelhouse portions and/or on the base portion. The floor support structure may be configured to support the luggage compartment floor thereon. At least one or two side members or side rails may be extensions of each wheelhouse portions or arranged adjacent thereto. Specifically, the at least one or both side members may extend from or at each one of the wheelhouse portions and in parallel to one another.

In an example, two further brackets may be attached to the at least one pivot element. Each one of the two further brackets may be attached to one of the two opposite wheelhouse portions. These brackets may be different in design from the brackets of the first aspect of this disclosure. However, they made be made from the same material, e.g. a sheet material or sheet metal.

It is noted that the above examples may be combined with each other irrespective of the aspect involved. Accordingly, the use of the bracket may be combined with structural features and, likewise, the bracket and vehicle may be combined with features described above regarding the use of the bracket.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a perspective view on a rear seat row for a vehicle;
- Figure 2: shows a side view onto the rear seat row of Fig. 1;
- Figure 3: shows a rear part structure of the vehicle of Fig. 1 with brackets mounted thereon;
- Figure 4: shows a frontal view onto a detail of the brackets mounted on the rear part structure shown in Fig. 3;
- Figure 5: shows a perspective view onto a schematic representation of one of the brackets in Fig. 4; and
- Figure 6: shows a cross-sectional view onto a schematic representation of one of the brackets in Fig. 4.

### DETAILED DESCRIPTION

The Figures are merely schematic representations and serve only to illustrate examples of the disclosure. Identical or equivalent elements are in principle provided with the same reference signs.

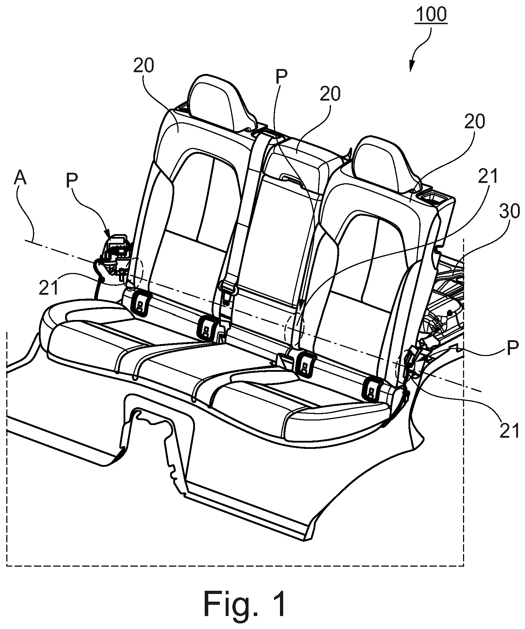

Fig. 1 shows a foldable rear seat row or arrangement for a vehicle 100. In this example, the foldable rear seat row or arrangement comprises three foldable rear seats 20 in a 40/20/40 split arrangement. Alternatively, a different split in width of the rear seats 20 may be provided or the number of rear seats 20 may be different, for example two.

In the example of Fig. 1, the rear seats 20 are mounted on a vehicle body, which may include a rear part structure 30 located in the rear end of the vehicle 100.

Further, the rear seats 20 are pivotable around a pivot axis A of one or more pivot elements 21 and pivot points P as shown in Fig. 1. For example, the pivot elements 21 may be formed by pins mounted to the seat frame of the rear seats 20 comprising a pivot point P as shown in Fig. 1. In the example of Fig. 1, the left and middle rear seats 20 may be collectively foldable and the right rear seat 20 may be individually foldable such that there are three pivot points P. However, other arrangements are possible, where for example each rear seat 20 can be individually folded, such that there would be fore pivot points P.

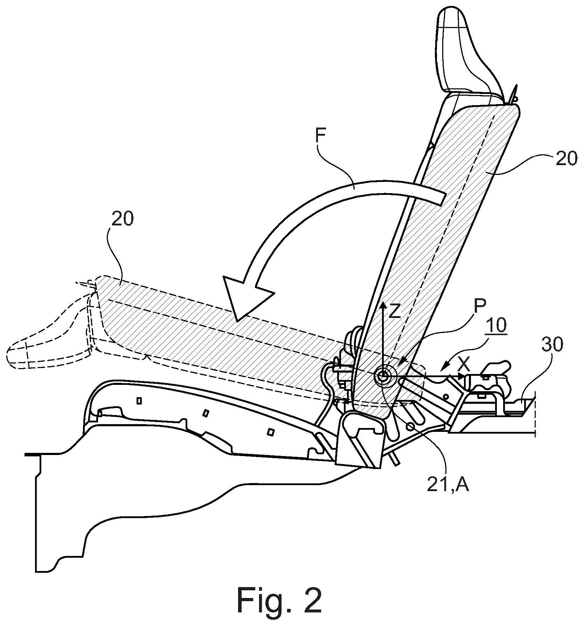

Fig. 2 shows the folding action F of one of the rear seats 20 around a pivot point P about the pivot axis A of a pivot element 21, which may for example be a pin attached to the seat frame of the rear seat 20 seen in Fig. 1. The folding action F takes place when a release mechanism is triggered. Any conventional release mechanism may be used. For example, a lever (not shown) may be coupled to a cable or rod mechanism (not shown) connected to a latch that holds the rear seat back in the upright position. Such lever may for example be positioned on the side of the seat back of the rear seat 20, the top of the seat back or in the trunk area of the vehicle 100. Pulling the lever may accordingly initiate the folding action F.

As shown in Fig. 2, the height of the rear seats 20 may be measured in the Z direction or axis, the depth or thickness of the rear seats 20 may be measured in the X direction or axis, and a width of the rear seats 20 may be measured in a Y direction or axis extending out of the plane of Fig. 2.

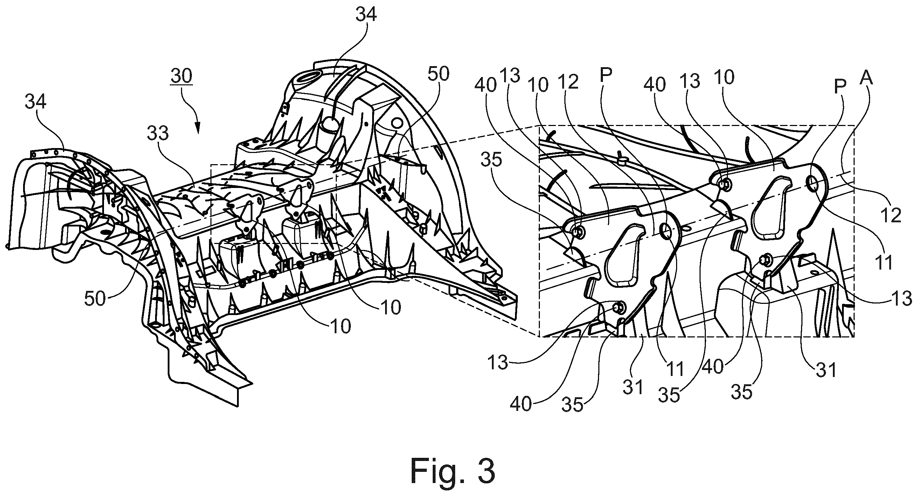

Fig. 3 shows a perspective view of the rear part structure 30 of the vehicle 100 as seen in Fig. 1, which may be monolithically designed through a casting process. The rear part structure 30 of the vehicle body of vehicle 100 comprises a base portion 33 and two wheelhouse portions 34, which are located opposite of one another and are arranged for partially housing a wheel (not shown) of the vehicle 100 therein. The base portion 33 extends in between the two wheelhouse portions 34.

The wheelhouse portion 34 may comprise support members, which are supporting a floor support structure (not shown) thereon, which in turn may be used for supporting a luggage compartment floor thereon (not shown) as part of the trunk area. Further, the wheelhouse portions 34 may comprise shock absorber segments (not shown) for receiving a shock absorber (not shown). The rear part structure 30 further comprises side members extending in length with or in parallel to the wheelhouse portions 34 and/or with the base portion 33 towards the front of the vehicle 100.

Various brackets 10, 50 are mounted on the rear part structure 30 for attachment of the rear seats 20 thereat, specifically with their pivot axis A and the one or more pivot elements 21 of the rear seats 20 thereat. The brackets 10 are shown in an enlarged detailed view of a portion of the rear part structure 30 in Fig. 3, whereas the further brackets 50 are only indicated in their position in Fig. 3.

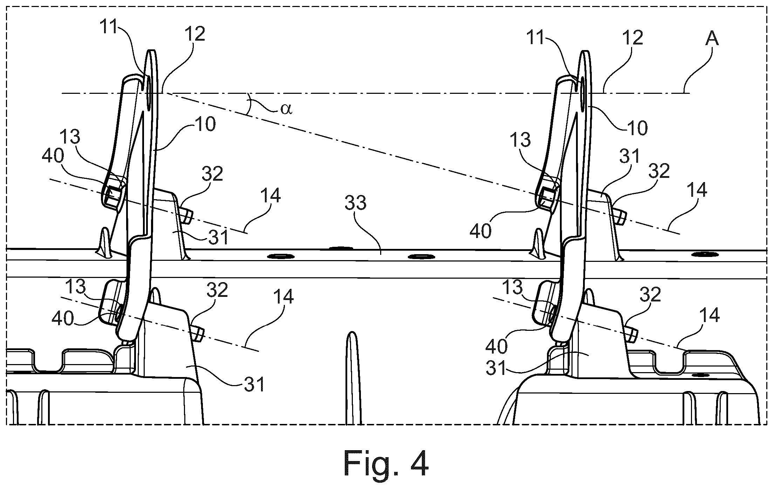

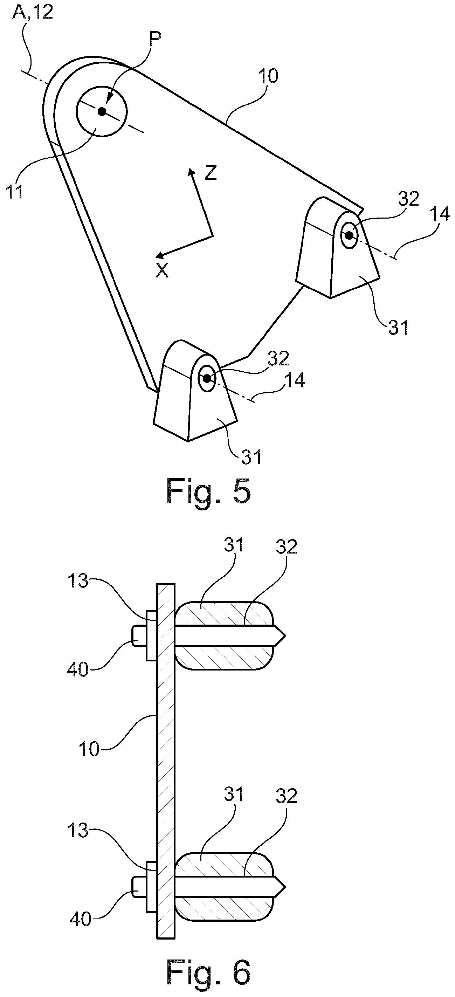

The perspective view on the exemplary two brackets 10 shown in Fig. 3 is complemented by the front view of Fig. 4. Schematic representations for illustration of the basic principles of the attachment of the bracket 10 to the rear part structure 30 are shown in Figs. 5 and 6.

In the example of Figs. 3 to 6, the brackets 10 are generally plate-shaped and may for example be punched from a sheet metal. As seen in Figs. 3 and 4, the brackets 10 may comprise geometric features like bent edges for increased stiffness. Further, the brackets 10 are shown exemplary with substantially triangular shapes.

Also, in the example of Figs. 3 and 4, there are two brackets 10 provided on the base portion 33 of the rear part structure 30 rather than a single bracket 10 as is required in the example of Fig. 1 with the three pivot points P, only one pivot point P being in between two rear seats 20. Accordingly, the design of Figs. 3 and 4 with two brackets 10 mounted on the base portion 33 enables four pivot points P and an optional individual folding of each one of three rear seats 20.

A first opening 11 of the bracket 10 comprises a first axis 12 extending through a center of the first opening 11. The first opening 11 or bore or hole serves as attachment to at least one pivot element 21 of one of the rear seats 20. The first axis 12 accordingly coincides with the pivot axis A such that a pivoting and thus the folding action F as seen in Fig. 2 is enabled about the pivot axis A and the pivot element's 21 attachment to the bracket 10. In the example of the triangularly shaped bracket 10, the first opening 11 is located at a tip of the triangular shape.

Further, two second openings 13, each comprising a second axis 14 extending through a center of each second opening 13, are provided on the bracket 10, e.g. drilled therethrough.

As seen in Figs. 4, 5 and 6, bolts 40 extend through the second openings 13 of each bracket 10 and attach the bracket 10 inside bosses 31 comprising third openings 32 or bores or holes, the bosses 31 being formed on the rear part structure 30 as structures protruding from the base portion 33 in the Z direction.

For example, the bolts 40 may comprise external threads corresponding to internal threads inside the third openings 32, thereby securing the bolts 40 inside the bosses 31 and fixing the brackets 10 in position relative to the bosses 31.

Guiding ribs 35 on the rear part structure 30, specifically on the base portion 33, are shown in Fig. 3 to guide the brackets 10 in a space between the bosses 31 and the guiding ribs 35 for easing the mounting process or, in other words, assembly process. In the example of the triangularly shaped bracket 10, the second openings 13 are essentially located at a side of the triangular shape opposite the tip comprising the first opening 11.

As seen in Fig. 4, there is provided an angle α between each second axis 14 and the pivot axis A and thus the first axis 11 coinciding therewith. Specifically, the respective openings 11, 13 in the bracket 10 as well as the third openings 14 are provided such that this angle α is provided, which is shown in Fig. 4 exemplary in the range of 10° to 15° but could be more or less, e.g. in the range of 0° to 45°.

The reason for the provision of this angle α lies in the simple adjustability of the bracket 10 towards tolerances in the casting process of the rear part structure 30. Specifically, over the course of the casting of rear part structures 30 during the assembly process of vehicles 100, it may occur that the dimensions of the rear part structure 30 slightly change due to the fluctuation of manufacturing parameters or generally the manufacturing process. When always using the same brackets 10, a misalignment of the pivot points P in relation to the pivot axis A could occur and result in the rear seats 20 clashing with each other when folding them.

To prevent this, the proposed design of the brackets 10 enables a simple adjustment possibility. Since the second openings 13 (and the first opening 11) can be drilled or machined into the brackets 10 during or before the assembly of the vehicle 100, the position of the second openings 13 on the brackets 10 may be adjusted in accordance with the new dimensions or tolerances of the rear part structure 10 currently manufactured or provided for assembly, specifically of the mounting of the rear seats 20 thereat.

For example, when a clashing of the rear seats 20 is noted after manufacturing, it may be assumed that the dimensions of the rear part structure 30 might have changed. Instead of changing the casting process of the rear part structure 30 somehow, the positioning of the drilling of the second openings 13 or, in other words, holes or bores may simply be adjusted.

The position of the second openings 13 may be adjusted in the Z and X direction as shown in Fig. 5 but not in the Y direction. Thereby, an adjustment of the position of the pivot axis A and thus the rear seats 20 with respect to the Z and X direction or axis may be provided when adjusting the positioning of the at least two second openings 13 on any newly provided or manufactured bracket 10 during the course of the drilling of the second openings 13.

Thereby, the design of the brackets 10 provides a simple yet effective measure to adapt the positions of the pivot point P of the rear seats 20 on the rear part structure 30 due to tolerances in the manufacturing.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: bracket
- 11: first opening
- 12: first axis
- 13: second opening
- 14: second axis
- 20: rear seat
- 21: pivot element
- 30: rear part structure
- 31: boss
- 32: third opening
- 34: base portion
- 34: wheelhouse portion
- 35: guiding rib
- 40: bolt
- 100: vehicle
- A: pivot axis
- F: folding action
- P: pivot point
- α: angle between first axis and second axis

## Claims

1. A bracket (10) for one or more foldable rear seats (20) of a vehicle (100), wherein the bracket (10) comprises:
a first opening (11) for attachment to at least one pivot element (21), the first opening (11) comprising a first axis (12) extending through a center of the first opening (11), the first axis (12) substantially coinciding with a pivot axis (A) of the at least one pivot element (21) for folding the one or more foldable rear seats (20) around the pivot axis (A); and
at least two second openings (13) for attachment to a rear part structure (30) of the vehicle (100), wherein each one of the at least two second openings (13) comprises a second axis (14) extending through each center of each one of the at least two second openings (13), and wherein each second axis (14) is oriented at an angle (α) in the range of 0° to 45° to the first axis (12).

2. The bracket (10) of claim 1, wherein each second axis (14) is oriented at an angle (α) in the range of 3° to 30° to the first axis (12).

3. The bracket (10) of claim 1 or 2, wherein the at least two second openings (13) are the only openings for attachment to the rear part structure (30).

4. The bracket (10) of any one of the previous claims, wherein the bracket (10) comprises a substantially triangular shape, wherein the first opening (11) is arranged at a tip of the triangular shape and the second openings (12) are arranged at a side of the bracket (10) opposite the tip.

5. The bracket (10) of any one of the previous claims, wherein the bracket (10) is made from a sheet material.

6. Use of the bracket (10) of any one of the previous claims in a vehicle (100).

7. A vehicle (100) comprising one or more foldable rear seats (20) and a rear part structure (30), wherein a bracket (10) of any one of claims 1 to 5 is attached through the second openings (13) to the rear part structure (30), and wherein the bracket (10) is attached to the at least one pivot element (21) through the first opening (11).

8. The vehicle (100) of claim 7, wherein the second openings (13) are the only openings of the bracket (10) through which the second openings (13) are attached to the rear part structure (30).

9. The vehicle (100) of claim 7 or 8, wherein the vehicle (100) comprises two brackets (10) attached through their second openings (13) to the rear part structure (30) and attached to the at least one pivot element (21) of two or more foldable rear seats (20) through their first openings (11).

10. The vehicle (100) of any one of claims 7 to 9, wherein the vehicle (100) comprises bolts (40) fixing the bracket (10) through the second openings (13) to the rear part structure (30).

11. The vehicle (100) of claim 10, wherein the rear part structure (30) comprises bosses (31), each one of the bosses (31) comprising a third opening (32), and wherein each one of the bolts (40) fixes the bracket (10) through the second openings (13) and the third openings (32) of the bosses (31) to the rear part structure (40).

12. The vehicle (100) of claim 11, wherein the rear part structure (30) comprises guiding ribs (35) adjacent to the bosses (31), the bracket (10) being at least partially guided in between the bosses (31) and the guiding ribs (35).

13. The vehicle (100) of claim 11 or 12, wherein the rear part structure (30) with the bosses (31) is a monolithically casted structure.

14. The vehicle (100) of any one of claims 11 to 13, wherein the rear part structure (10) further comprises two wheelhouse portions (34) for partially housing a wheel therein, and wherein the rear part structure (10) comprises a base portion (33) extending between the two wheelhouse portions (34), wherein the bosses (31) are arranged on the base portion (33).

15. The vehicle (100) of claim 14, wherein two further brackets (50) are attached to the at least one pivot element (21), wherein each one of the two further brackets (50) is attached to one of the two opposite wheelhouse portions (34).
